(19) Europäisches Patentamt
European Patent Office
Office européen des brevets

(11) **EP 4 752 866 A1**

(12) **EUROPEAN PATENT APPLICATION**

(43) Date of publication:
**03.06.2026 Bulletin 2026/23**

(21) Application number: **24216742.7**

(22) Date of filing: **02.12.2024**

(51) International Patent Classification (IPC):
*G09B 23/28* (2006.01)

(52) Cooperative Patent Classification (CPC):
**G09B 23/288**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Koninklijke Philips N.V.
5656 AE Eindhoven (NL)**

(72) Inventors:
• LIU, Chenguang
  5656 AG Eindhoven (NL)
• RAJE, Harshavardhan
  5656 AG Eindhoven (NL)
• ROY, Lorne
  5656 AG Eindhoven (NL)
• JORGENSON, Dawn Blilie
  5656 AG Eindhoven (NL)

(74) Representative: **Philips Intellectual Property &
Standards
High Tech Campus 52
5656 AG Eindhoven (NL)**

(54) **TRANSDUCIVE SIGNAL MODULATOR FOR SIMULATED CARDIOPULMONARY RESUSCITATION**

(57)     A cardiopulmonary resuscitation simulation system employing a CPR manikin (30) and a transducive signal modulator (40). In operation, the transducive signal modulator (40) derives a corrupted simulated electrocardiogram signal from a signal modulation of a clean simulated electrocardiogram signal electromechanically responsive to an oscillating compression depth of the CPR manikin (30) during a simulated application of the cardiopulmonary resuscitation to the CPR manikin (30), and further derives the corrupted simulated thoracic impedance signal from a signal modulation of a clean simulated thoracic impedance signal electromechanically responsive to an oscillating deformation of the CPR manikin (30) during the simulated application of the cardiopulmonary resuscitation to the CPR manikin (30).

FIG. 2A

## Description

FIELD OF THE INVENTION

The present disclosure generally relates to a simulated cardiopulmonary resuscitation (CPR) applied to a CPR manikin. The present disclosure specifically relates to a modulation of signals when chest compressions are performed during the simulated CPR.

BACKGROUND OF THE INVENTION

Cardiopulmonary resuscitation (CPR) is lifesaving intervention that is provided when a patient is in cardiac arrest (e.g., with no or ineffective mechanical activity of the patient's heart) and primarily consists of chest compressions often combined with ventilation and the administration of medication. A quality of CPR is dependent on various factors including maintaining an adequate compression rate and compression depth and avoiding excessive ventilation. As such, training responders via a simulated application of CPR to a CPR manikin is well known in the art of the present disclosure.

During an application of CPR to the patient, defibrillator can be attached to a patient 10 by an electrode pairing to thereby conditionally deliver defibrillating shock(s) to the patient. More specifically, the defibrillator can deliver a high-voltage impulse to the heart of patient in order to restore normal rhythm and contractile function for the heart of patient. As such, a testing of the defibrillator when not in use with CPR is mandated to ensure an operational efficiency of the defibrillator when in use with CPR.

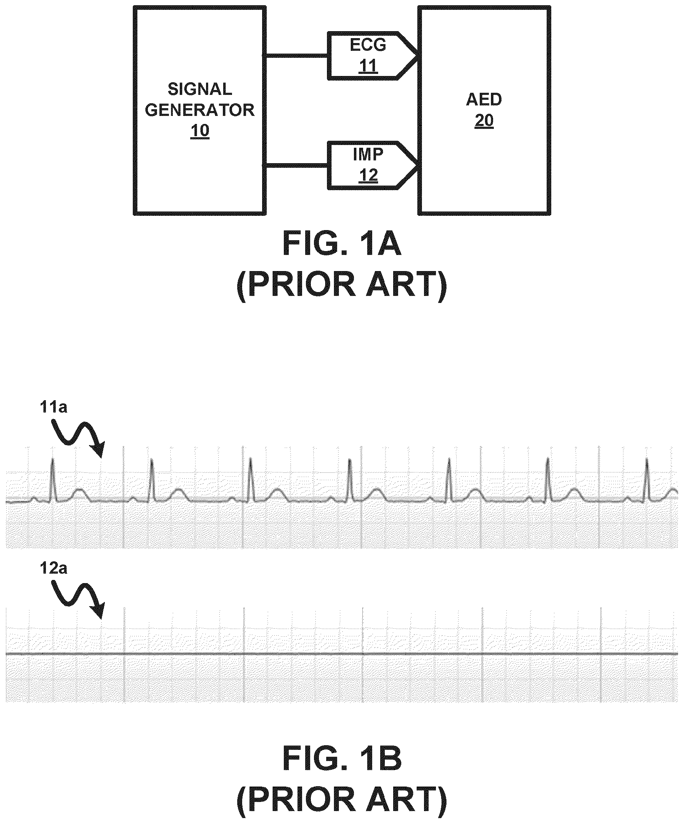

For example, FIG. 1A illustrates a signal generator 10 and an automatic external defibrillator (AED) 20. For purposes of testing the AED 20 when not is use with CPR as known in the art of the present disclosure, signal generator 10 is operated to generate a clean electrocardiogram (ECG) signal 11 (e.g., clean ECG signal 1 1a of FIG. 1B) and a clean thoracic impedance signal 12 (e.g., clean thoracic impedance signal 12a as shown in FIG. 1C), both excluding any artifacts associated with CPR being applied to a patient (i.e. CPR artifacts).

As known in the art of the present disclosure, AED 20 analyzes clean ECG signal 11 for any shockable rhythm(s) (e.g., ventricular fibrillation or ventricular tachycardia) and signal generator 10 temporally generates clean ECG signal 11 with and without shockable rhythms to ascertain how effective AED 20 is in detecting the shockable rhythms within clean ECG signal 11.

Also as known in the art of the present disclosure, AED 20 further compares the clean thoracic impedance signal 12 to a threshold delineating a probable successful defibrillation or an improbable successful defibrillation based on an impedance between an electrode pairing attached to the patient, and signal generator 20 temporally generates clean thoracic impedance signal 12 at various flat levels to ascertain how effective AED 20 is in comparing the clean thoracic impedance signal 12 to the threshold.

SUMMARY OF THE INVENTION

The present disclosure is directed to an operational demonstration and/or testing of a defibrillator (e.g., an AED, a semi-automatic defibrillator and a manual defibrillator) during a simulated application of CPR to a CPR manikin.

The present disclosure can be embodied as (1) a transducive signal modulator for generating a corrupted simulated electrocardiogram signal and a corrupted simulated thoracic impedance signal during a simulated application of a CPR to a CPR manikin, (2) a CPR simulation system for operationally demonstrating and/or testing a defibrillator based on a generation of a corrupted simulated electrocardiogram signal and a corrupted simulated thoracic impedance signal during a simulated application of a CPR to a CPR manikin, and (3) a CPR simulation method for operationally demonstrating and/or testing a defibrillator based on a generation of a corrupted simulated electrocardiogram signal and a corrupted simulated thoracic impedance signal during a simulated application of a CPR to a CPR manikin.

Various exemplary embodiments of a transducive signal modulator of the present disclosure employ a depth transducer and a deformation transducer.

The depth transducer is internally disposed within the CPR manikin to electromechanically respond to an oscillating compression depth of the CPR manikin during the simulated application of the cardiopulmonary resuscitation to the CPR manikin. The depth transducer is configured to derive the corrupted simulated electrocardiogram signal from a signal modulation of a clean simulated electrocardiogram signal electromechanically responsive to the oscillating compression depth of the CPR manikin.

The deformation transducer is internally disposed within the CPR manikin to electromechanically respond to an oscillating deformation of the CPR manikin during the simulated application of the cardiopulmonary resuscitation to the CPR manikin. The deformation transducer is configured to derive the corrupted simulated thoracic impedance signal from a signal modulation of a clean simulated thoracic impedance signal electromechanically responsive to the oscillating deformation of the CPR manikin.

Various exemplary embodiments of a CPR simulation system of the present disclosure employs an aforementioned transducive signal modulator of the present disclosure and a CPR manikin.

Various exemplary embodiments of a CPR simulation system of the present disclosure can further employ a signal generator for generating the clean ECG signal and the clean thoracic impedance signal during the simulated application of the cardiopulmonary resuscitation to the CPR manikin, and/or a defibrillator for analyzing the corrupted ECG signal and the corrupted thoracic impedance signal during or subsequent to the simulated application of the cardiopulmonary resuscitation to the CPR manikin.

Various exemplary embodiments of a CPR simulation method of the present disclosure involve (1) an electromechanical responding, by a transducive signal modulator internally affixed within a CPR manikin, of an oscillating compression depth of the CPR manikin during the simulated application of the cardiopulmonary resuscitation to the CPR manikin, (2) a deriving, by the transducive signal modulator, of a corrupted simulated electrocardiogram signal from a signal modulation of the clean simulated electrocardiogram signal electromechanically responsive to the oscillating compression depth of the CPR manikin, (3) an electromechanical responding, by the transducive signal modulator, of an oscillating deformation of the CPR manikin during the simulated application of the cardiopulmonary resuscitation to the CPR manikin, and (4) a deriving, by the transducive signal modulator, of a corrupted simulated thoracic impedance signal from a signal modulation of the clean simulated thoracic impedance signal electromechanically responsive to the oscillating deformation of the CPR manikin.

Various exemplary embodiments of a CPR simulation method of the present disclosure can further involve (5) a generating, by a signal generator, of the clean simulated electrocardiogram signal and the clean simulated thoracic impedance signal during a simulated application of the cardiopulmonary resuscitation to the CPR manikin, and/or (6) operationally demonstrating and/or testing a defibrillator based on the corrupted simulated electrocardiogram signal and the corrupted simulated thoracic impedance signal during or subsequent to the simulated application of the cardiopulmonary resuscitation to the CPR manikin.

The foregoing exemplary embodiments and other embodiments of the present disclosure as well as various structures and advantages of the present disclosure will become further apparent to those having ordinary skill in the art from the following detailed description of various embodiments of the present disclosure read in conjunction with the accompanying drawings. The detailed description and drawings are merely illustrative of the present disclosure rather than limiting, the scope of the present disclosure being defined by the appended claims and equivalents thereof.

BRIEF DESCRIPTION OF THE DRAWINGS

The present disclosure will present in detail the following description of exemplary embodiments with reference to the following figures wherein:

FIG. 1A illustrates an exemplary defibrillation demonstration/testing system as known in the art of the present disclosure

FIG. 1B illustrates an exemplary clean ECG signal and an exemplary clean thoracic impedance signal as known in the art of the present disclosure;

FIG. 2A illustrates an exemplary cardiopulmonary resuscitation system in accordance with present disclosure;

FIG. 2B illustrates an exemplary corrupted ECG signal and an exemplary corrupted thoracic impedance signal in accordance with the art of the present disclosure;

FIGS. 3A and 3B illustrate an exemplary depth transducer in accordance with the present disclosure.

FIGS. 4A-4C illustrate exemplary embodiments of the depth transducer of FIGS. 3A and 3B.

FIGS. 5A and 5B illustrate an exemplary deformation transducer in accordance with the present disclosure.

FIGS. 6A-6C illustrate exemplary embodiments of the deformation transducer of FIGS. 5A and 5B.

FIGS. 7A and 7B illustrate exemplary embodiments of a dual transducer in accordance with the present disclosure.

FIG. 7C illustrate exemplary embodiments of a depth sensor and dual signal combiner in accordance with the present disclosure.

DETAILED DESCRIPTION OF THE PREFERRED EMBODIMENTS

The present disclosure is directed to electromechanical based devices, systems and methods for simulating real patient behavior when chest compressions are performed during cardiopulmonary resuscitation (CPR) by adding a motion artifact to the thoracic impedance signal and to the ECG signal seen across defibrillator electrode pads.

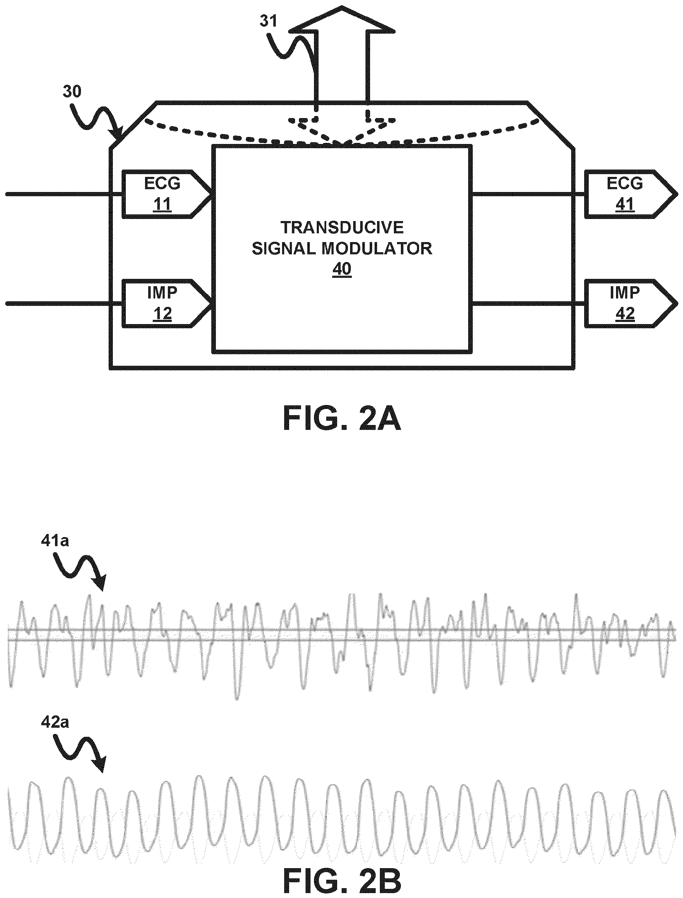

To facilitate an understanding of the present disclosure, the following description of FIG. 2A-6C teaches devices, systems and methods in accordance with the present disclosure for making and using various embodiments of the present disclosure. From the following description of FIGS. 2A-6C, those having ordinary skill in the art of the present disclosure will appreciate how to apply the present disclosure to make and use additional embodiments of devices, systems and methods in accordance with the present disclosure.

Referring to FIG. 2A, a cardiopulmonary resuscitation simulation system of the present disclosure employs a CPR manikin 30 as known in the art of the present disclosure and a transducive signal modulator 40 in accordance with the present disclosure for generating a corrupted simulated electrocardiogram (ECG) signal 41 (e.g., signal 41a of FIG. 2B) and a corrupted simulated thoracic impedance signal 42 (e.g., signal 42a of FIG. 2B) during a simulated application of a cardiopulmonary resuscitation to CPR manikin 30.

More particularly as shown in FIG. 1A, transducive signal modulator 40 is disposed within CPR manikin 30 to electromechanically respond to an oscillating compression motion 31 of the CPR manikin 30 during a simulated CPR.

Transducive signal modulator 40 derives corrupted simulated electrocardiogram signal 41 from a signal modulation of clean simulated electrocardiogram signal 11 (FIG. 1A) based on an electromechanical response by transducive signal modulator 40 to an oscillating compression depth of CPR manikin 30 during the simulated CPR.

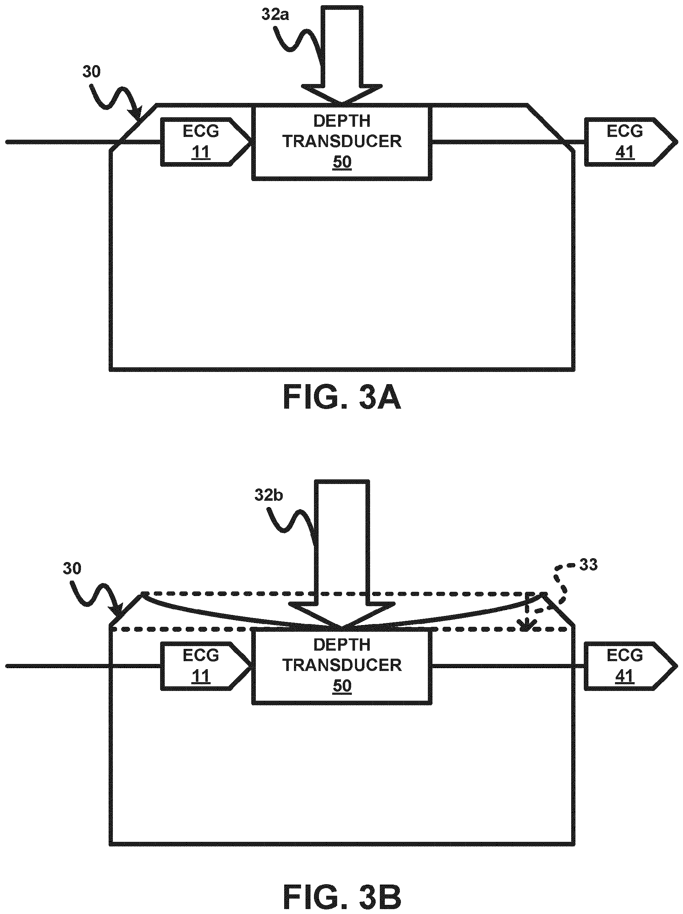

In one exemplary embodiment for deriving corrupted simulated electrocardiogram signal 41, transducive signal modulator 40 employs a deformation transducer 50 as shown in FIGS. 3A and 3B.

Referring to FIGS. 3A and 3B, depth transducer 50 is internally affixed to a base or a chest plate of CPR manikin 30 (not shown) whereby depth transducer 50 electromechanically responds to an oscillating compression depth 33 resulting from an application of beginning compression force 32a to a maximum compression force 32b. From this electromechanical response, depth transducer 50 executes a signal modulation of clean simulated ECG signal 11 into corrupted simulated ECG signal 41.

In practice, depth transducer 50 is modeled as a signal generator or a level shifter with variable gain, whereby the gain is mapped using depth data. $\Delta V = K$ ($d$) $d$. Nonetheless, a good approximation would be the case where the gain is constant, whereby the sinusoidal chest compressions will produce sinusoidal voltage differentials to thereby establish a one-to-one map.

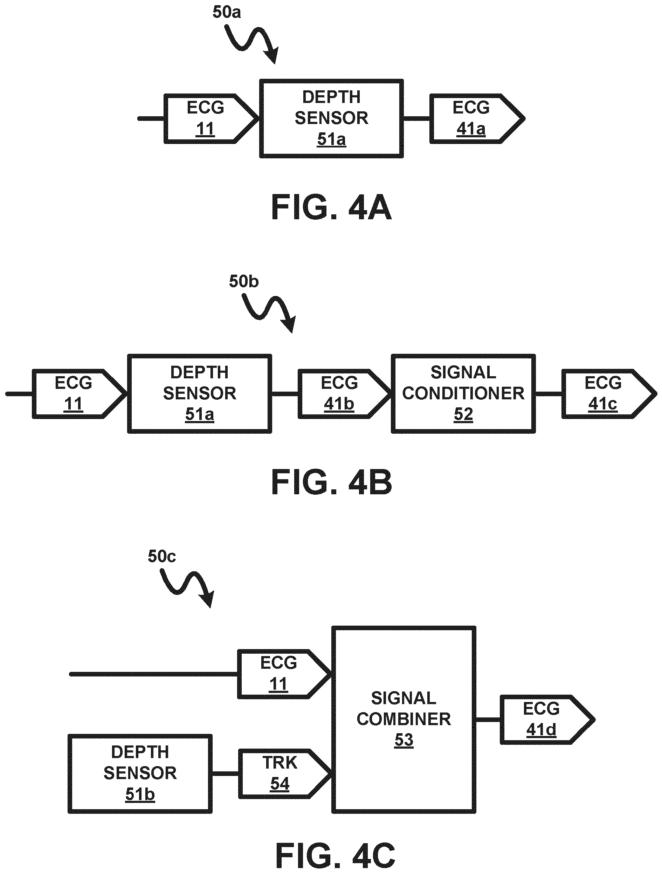

FIGS. 4A-4B illustrate various embodiments of depth transducer 50.

Referring to FIG. 4A, a depth transducer 50a includes a depth sensor 51a for electromechanically responding to the oscillating compression depth 33 and executes a signal modulation of clean simulated ECG signal 11 into corrupted simulated ECG signal 41a (analog) based on the electromechanical response.

In one exemplary embodiment, depth sensor 51a employs a photoresistor.

Referring to FIG. 4B, a depth transducer 50b includes a depth sensor 51b for electromechanically responding to the oscillating compression depth 33 and executes a signal modulation of clean simulated ECG signal 11 into modulated simulated ECG signal 41b (analog) based on the electromechanical response. Depth transducer 50b further includes a signal conditioner 52 for applying a gain to modulated simulated ECG signal 41b to yield corrupted simulated ECG signal 41c.

In one exemplary embodiment, depth sensor 51b employs a photoresistor and signal conditioner 52 includes a potentiometer in series with a divider.

Referring to FIG. 4C, a depth transducer 50c includes a depth sensor 51c for electromechanically responding to the oscillating compression depth 33 and generates a tracking signal 54 based on the electromechanical response. Depth transducer 50c further includes a signal combiner 53 for combining clean simulated ECG signal 11 and tracking signal 54 to yield corrupted ECG signal 41d.

In one exemplary embodiment, depth sensor 51c employs a time-of flight sensor, an ultrasound sensor, a depth camera or a laser, and signal combiner 53 employs a microcontroller and digital-to-analog converter.

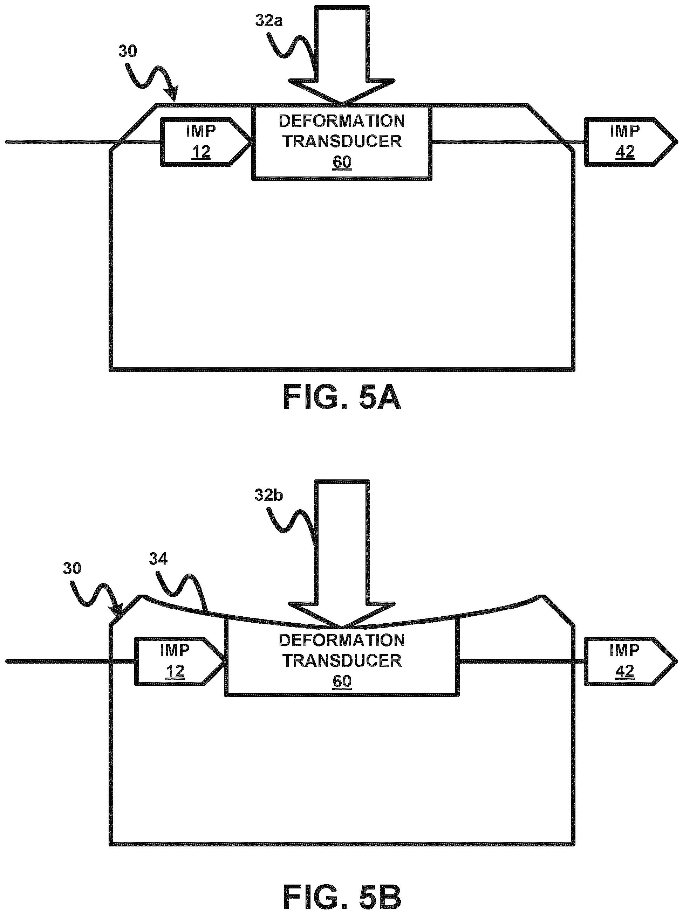

Referring to FIGS. 5A and 5B, deformation transducer 60 is internally affixed to a base or a chest plate of CPR manikin 30 (not shown) whereby deformation transducer 60 electromechanically responds to an oscillating deformation 34 resulting from an application of beginning compression force 32a to a maximum compression force 32b. From this electromechanical response, deformation transducer 60 executes a signal modulation of clean simulated thoracic impedance signal 12 into corrupted simulated thoracic impedance signal 42.

In practice, for optimally affixing deformation transducer 60 with CPR manikin 30, a chest plate of CPR manikin 30 can be removed and the deformation of different regions can be closely observed to identify regions with a specified surface strain of (e.g., approximately 0.008) when the CPR manikin undergoes a specified degree of compression (e.g., two (2) inches). On regions of this strain, a strain gauge 51 may be affixed to map deformation to resistance.

Furthermore in practice, a gauge factor relates strain seen to the ratio of change seen in resistance to the nominal resistance $\frac{\Delta L}{L} K = \frac{\Delta R}{R}$. This means the change in resistance for the strain gauge is known (e.g., approximately two (2) ohms for a BF120-10aa strain gauge). As such, a base resistance of the strain gauge (e.g., 120 ohms) is fixed whereby two (2) strain gauges can be wired in parallel, whereby the total resistance of the manikin is now 60 + 1 $\Omega$, which is within the typical range for a real patient.

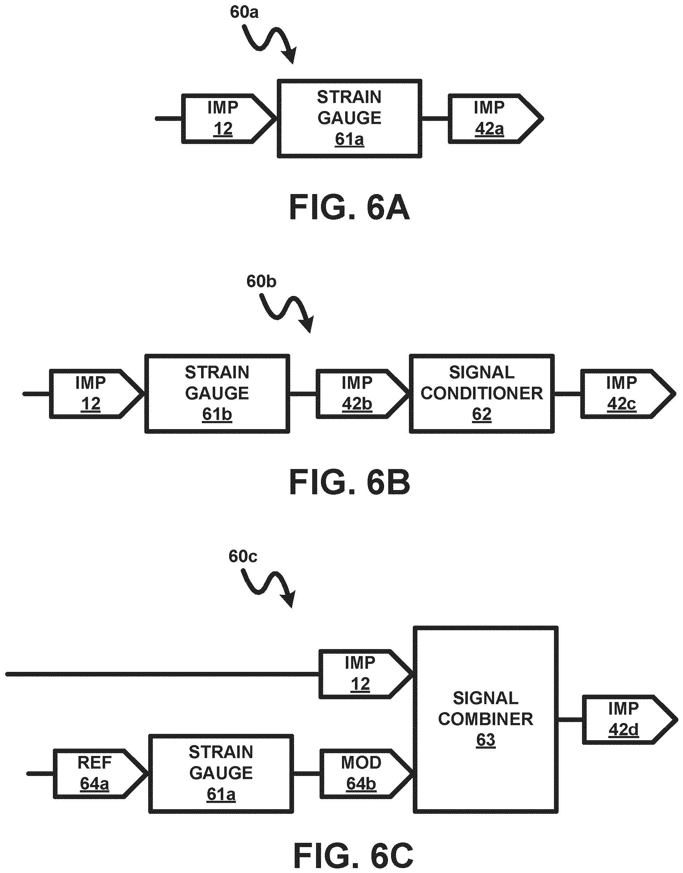

FIGS. 6A-6B illustrate various embodiments of deformation transducer 60.

Referring to FIG. 6A, a deformation transducer 60a includes a strain gauge 61a for electromechanically responding to the oscillating deformation 34 and executes a signal modulation of clean simulated thoracic impedance signal 12 into corrupted simulated thoracic impedance signal 42a (analog) based on the electromechanical response.

In one exemplary embodiment, strain gauge 61a employs a BF120-10a strain gauge and a network of strain gauges 61a can be utilized.

Referring to FIG. 6B, a deformation transducer 60b includes a strain gauge 61b for electromechanically responding to the oscillating deformation 34 and executes a signal modulation of clean simulated thoracic impedance signal 12 into modulated simulated thoracic impedance signal 42b (analog) based on the electromechanical response. Deformation transducer 60b further includes a signal conditioner 62 for applying a gain to modulated simulated thoracic impedance signal 42b to yield corrupted simulated thoracic impedance signal 42c.

In one exemplary embodiment, signal conditioner 52 includes a potentiometer in series with a divider for strain gauge 61b.

Referring to FIG. 6C, a deformation transducer 60c includes a strain gauge 61c for electromechanically responding to the oscillating deformation 34 and modulated a reference signal 64a into a modulated reference signal 64b based on the electromechanical response. Deformation transducer 60c further includes a signal combiner 53 for combining clean simulated thoracic impedance signal 12 and modulated reference signal 64b to yield corrupted thoracic impedance signal 42d.

In one exemplary embodiment, signal combiner 53 employs a microcontroller and digital-to-analog converter.

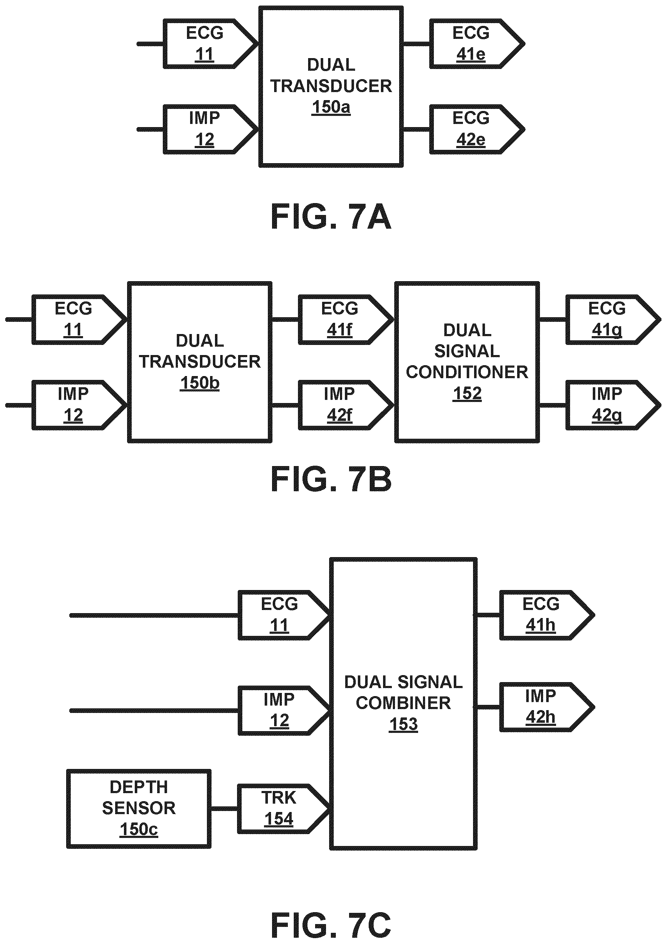

FIGS. 7A and 7B illustrate various embodiments of a dual transducer in accordance with the present disclosure. In practice, as would be appreciated by one skilled in the art of the present disclosure, a dual transducer of the present invention implements a combination of a depth transducer and a deformation transducer as described in the present disclosure.

Referring to FIG. 7A, a dual transducer 150a of the present disclosure is electromechanically responsive to an oscillating compression depth (e.g., oscillating compression depth 33 of FIG. 3B) to execute a signal modulation of clean simulated ECG signal 11 into corrupted simulated ECG signal 41e (analog) based on the electromechanical response, and to further execute a signal modulation of clean simulated thoracic impedance signal 12 into corrupted simulated thoracic impedance signal 42e (analog) based on the electromechanical response.

In one exemplary embodiment, dual transducer 150a employs a photoresistor.

Referring to FIG. 7B, a dual transducer 150b is electromechanically responsive to an oscillating compression depth (e.g., oscillating compression depth 33 of FIG. 3B) to execute a signal modulation of clean simulated ECG signal 11 into modulated simulated ECG signal 41f (analog) based on the electromechanical response, and to further execute a signal modulation of clean simulated thoracic impedance signal 12 into modulated simulated thoracic impedance signal 42f (analog) based on the electromechanical response.

A dual signal conditioner 152 applies a gain to modulated simulated ECG signal 41f to yield corrupted simulated ECG signal 41g and a gain to modulated simulated thoracic impedance signal 42f (analog) to yield corrupted simulated ECG signal 41fg.

In one exemplary embodiment, dual transducer 150b employs a photoresistor and dual signal conditioner 152 includes a potentiometer in series with a divider for the ECG signal 41f and a potentiometer in series with a divider for the impedance signal 41f.

Referring to FIG. 7C, depth sensor 51c is electromechanically responsive to the oscillating compression depth 33 (e.g., oscillating compression depth 33 of FIG. 3B) and generates a tracking signal 154 based on the electromechanical response.

A dual signal combiner 153 combines simulated ECG signal 11 and tracking signal 154 to yield corrupted ECG signal 41h, and further combines clean simulated thoracic impedance signal 12 and tracking signal 154 to yield corrupted thoracic impedance signal 42h.

In one exemplary embodiment, depth sensor 51c employs a time-of flight sensor, an ultrasound sensor, a depth camera or a laser, and signal combiner 53 employs a microcontroller and digital-to-analog converter.

In practice, a CPR manikin can be connected to a defibrillator with the defibrillation shock circuity enabled or disabled. In one exemplary embodiment when the CPR manikin is connected to a defibrillator with the defibrillation shock circuity enabled, a module as known in the art of the present disclosure or hereinafter conceived can be incorporated in a cardiopulmonary resuscitation simulation system of the present disclosure to protect the system, particularly a transducive signal modulator of the present disclosure, when a defibrillating shock is applied to the CPR manikin by the defibrillator connected to the CPR manikin whereby the system can tolerate the defibrillating shock.

From the description of FIGS. 2A-6C herein, those having ordinary skill in the art will appreciate the numerous benefits of the present disclosure including, but not limited to, a generation and communication of real-time CPR corrupted signals for demonstrating and testing of defibrillators which can analyze CPR corrupted data, particularly as related to inducing an artifact a defibrillator can recognize as a motion artifact generated by CPR.

The present disclosure has been described with reference to the preferred embodiments. Modifications and alterations may occur to others upon reading and understanding the preceding detailed description. It is intended that the invention be construed as including all such modifications and alterations insofar as they come within the scope of the appended claims or the equivalents thereof.

Further, as one having ordinary skill in the art shall appreciate in view of the teachings provided herein, features, elements, components, etc. disclosed and described in the present disclosure/specification and/or depicted in the appended Figures and/or recited in the claims can be implemented in various combinations of hardware and software, and provide functions which may be combined in a single element or multiple elements. For example, the functions of the various features, elements, components, etc. shown/illustrated/depicted in the Figures and/or recited in the claims can be provided through the use of dedicated hardware as well as hardware capable of executing software in association with appropriate software. When provided by a processor, the functions can be provided by a single dedicated processor, by a single shared processor, or by a plurality of individual processors, some of which can be shared and/or multiplexed. Moreover, explicit use of the term "processor" or "controller" should not be construed to refer exclusively to hardware capable of executing software, and can implicitly include, without limitation, digital signal processor ("DSP") hardware, memory (e.g., read only memory ("ROM") for storing software, random access memory ("RAM"), non-volatile storage, etc.) and virtually any means and/or machine (including hardware, software, firmware, combinations thereof, etc.) which is capable of (and/or configurable) to perform and/or control a process.

Moreover, all statements herein reciting principles, aspects, and exemplary embodiments of the present disclosure, as well as specific examples thereof, are intended to encompass both structural and functional equivalents thereof. Additionally, it is intended that such equivalents include both currently known equivalents as well as equivalents developed in the future (e.g., any elements developed that can perform the same or substantially similar functionality, regardless of structure). Thus, for example, it will be appreciated by one having ordinary skill in the art in view of the teachings provided herein that any block diagrams presented herein can represent conceptual views of illustrative system components and/or circuitry embodying the principles of the invention. Similarly, one having ordinary skill in the art should appreciate in view of the teachings provided herein that any flow charts, flow diagrams and the like can represent various processes which can be substantially represented in computer readable storage media and so executed by a computer, processor or other device with processing capabilities, whether or not such computer or processor is explicitly shown.

Having described preferred and exemplary embodiments of the present disclosure, which embodiments are intended to be illustrative and not limiting, it is noted that modifications and variations can be made by persons having ordinary skill in the art in view of the teachings provided herein, including the appended Figures and claims. It is therefore to be understood that changes can be made in/to the preferred and exemplary embodiments of the present disclosure which are within the scope of the present disclosure and exemplary embodiments disclosed, described and taught herein.

Moreover, it is contemplated that corresponding and/or related systems incorporating and/or implementing the device or such as may be used/implemented in a device in accordance with the present disclosure are also contemplated and considered to be within the scope of the present disclosure. Further, corresponding and/or related method for manufacturing and/or using a device and/or system in accordance with the present disclosure are also contemplated and considered to be within the scope of the present disclosure.

**Claims**

1. A transducive signal modulator (40) for generating a corrupted simulated electrocardiogram signal and a corrupted simulated thoracic impedance signal during a simulated application of a cardiopulmonary resuscitation to a CPR manikin (30), the transducive signal modulator (40) comprising:

    a depth transducer (50) internally disposed within the CPR manikin (30) to electromechanically respond to an oscillating compression depth of the CPR manikin (30) during the simulated application of the cardiopulmonary resuscitation to the CPR manikin (30),
    wherein the depth transducer (50) is configured to derive the corrupted simulated electrocardiogram signal from a signal modulation of a clean simulated electrocardiogram signal electromechanically responsive to the oscillating compression depth of the CPR manikin (30); and
    a deformation transducer (60) internally disposed within the CPR manikin (30) to electromechanically respond to an oscillating deformation of the CPR manikin (30) during the simulated application of the cardiopulmonary resuscitation to the CPR manikin (30),
    wherein the deformation transducer (60) is configured to derive the corrupted simulated thoracic impedance signal from a signal modulation of a clean simulated thoracic impedance signal electromechanically responsive to the oscillating deformation of the CPR manikin (30).

2. The transducive signal modulator (40) of claim 1,

    wherein the depth transducer (50) includes a depth sensor (51) internally affixed within the CPR manikin (30) to electromechanically respond to the oscillating compression depth of the CPR manikin (30); and
    wherein the depth sensor (51) is configured to modulate the clean simulated electrocardiogram signal into the corrupted simulated electrocardiogram signal as a function of the oscillating compression depth of the CPR manikin (30).

3. The transducive signal modulator (40) of claim 1,

    wherein the depth transducer (50) includes a depth sensor (51) internally affixed within the CPR manikin (30) to electromechanically respond to the oscillating compression depth of the CPR manikin (30);
    wherein the depth sensor (51) is configured to modulate the clean simulated electrocardiogram signal into the modulated simulated electrocardiogram signal as a function of the oscillating compression depth of the CPR manikin (30); and

wherein the depth transducer (50) further includes a signal conditioner (52) configured to condition the modulated simulated electrocardiogram signal into the corrupted simulated electrocardiogram signal.

4. The transducive signal modulator (40) of claim 1,

wherein the depth transducer (50) includes a depth sensor (51) internally affixed within the CPR manikin (30) to electromechanically respond to the oscillating compression depth of the CPR manikin (30);

wherein the depth sensor (51) is configured to generate a tracking signal as a function of the oscillating compression depth of the CPR manikin (30); and

wherein the depth transducer (50) includes a signal combiner (53) configured to combine the clean simulated electrocardiogram signal and the tracking signal into the corrupted simulated electrocardiogram signal.

5. The transducive signal modulator (40) of claim 1,

wherein the deformation transducer (60) includes a strain gauge (61) internally affixed within the CPR manikin (30) to electromechanically respond to the oscillating deformation of the CPR manikin (30); and

wherein the strain gauge (61) is configured to modulate the clean simulated thoracic impedance signal into the corrupted simulated thoracic impedance signal as a function of the oscillating deformation of the CPR manikin (30).

6. The transducive signal modulator (40) of claim 1,

wherein the deformation transducer (60) includes a strain gauge (61) internally affixed within the CPR manikin (30) to electromechanically respond to the oscillating deformation of the CPR manikin (30);

wherein the strain gauge (61) is configured to modulate the clean simulated thoracic impedance signal into a modulated simulated thoracic impedance signal as a function of the oscillating deformation of the CPR manikin (30); and

wherein the deformation transducer (60) further includes a signal conditioner (62) configured to condition the modulated simulated thoracic impedance signal into the corrupted simulated thoracic impedance signal.

7. The transducive signal modulator (40) of claim 1,

wherein the deformation transducer (60) includes a strain gauge (61) internally affixed within the CPR manikin (30) electromechanically respond to the oscillating deformation of the CPR manikin (30);

wherein the strain gauge (61) is configured to modulate a reference deformation signal into a modulated deformation signal as a function of the oscillating deformation of the CPR manikin (30); and

wherein the deformation transducer (60) further includes a signal combiner (63) configured to combine the clean simulated thoracic impedance signal and the modulated deformation signal into the corrupted simulated thoracic impedance signal.

8. A cardiopulmonary resuscitation simulation system, comprising:

a CPR manikin (30); and
a transducive signal modulator (40) for generating a corrupted simulated electrocardiogram signal and a corrupted simulated thoracic impedance signal during a simulated application of the cardiopulmonary resuscitation to the CPR manikin (30), wherein the transducive signal modulator (40) includes:

a depth transducer (50) internally disposed within the CPR manikin (30) to electromechanically respond to an oscillating compression depth of the CPR manikin (30) during the simulated application of the cardiopulmonary resuscitation to the CPR manikin (30),
wherein the depth transducer (50) is configured to derive the corrupted simulated electrocardiogram signal from a signal modulation of a clean simulated electrocardiogram signal electromechanically responsive to the oscillating compression depth of the CPR manikin (30); and
a deformation transducer (60) internally disposed within the CPR manikin (30) to electromechanically respond to an oscillating deformation of the CPR manikin (30) during the simulated application of the cardiopulmonary resuscitation to the CPR manikin (30),
wherein the deformation transducer (60) is configured to derive the corrupted simulated thoracic impedance signal from a signal modulation of a clean simulated thoracic impedance signal electromechanically responsive to the oscillating deformation of the CPR manikin (30).

9. The cardiopulmonary resuscitation simulation system of claim 8,

wherein the depth transducer (50) includes a depth sensor (51) internally affixed within the CPR manikin (30) to electromechanically respond to the oscillating compression depth of the CPR manikin (30); and

wherein the depth sensor (51) is configured to modulate the clean simulated electrocardiogram signal into the corrupted simulated electrocardiogram signal as a function of the oscillating compression depth of the CPR manikin (30).

10. The cardiopulmonary resuscitation simulation system of claim 8,

wherein the depth transducer (50) includes a depth sensor (51) internally affixed within the CPR manikin (30) to electromechanically respond to the oscillating compression depth of the CPR manikin (30);

wherein the depth sensor (51) is configured to modulate the clean simulated electrocardiogram signal into the modulated simulated electrocardiogram signal as a function of the oscillating compression depth of the CPR manikin (30); and

wherein the depth transducer (50) further includes a signal conditioner (52) configured to condition the modulated simulated electrocardiogram signal into the corrupted simulated electrocardiogram signal.

11. The cardiopulmonary resuscitation simulation system of claim 8,

wherein the depth transducer (50) includes a depth sensor (51) internally affixed within the CPR manikin (30) to electromechanically respond to the oscillating compression depth of the CPR manikin (30);

wherein the depth sensor (51) is configured to generate a tracking signal as a function of the oscillating compression depth of the CPR manikin (30); and

wherein the depth transducer (50) includes a signal combiner (53) configured to combine the clean simulated electrocardiogram signal and the tracking signal into the corrupted simulated electrocardiogram signal.

12. The cardiopulmonary resuscitation simulation system of claim 8,

wherein the deformation transducer (60) includes a strain gauge (61) internally affixed within the CPR manikin (30) electromechanically respond to the oscillating deformation of the CPR manikin (30); and

wherein the strain gauge (61) is configured to modulate the clean simulated thoracic impedance signal into the corrupted simulated thoracic impedance signal as a function of the oscillating deformation of the CPR manikin (30).

13. The cardiopulmonary resuscitation simulation system of claim 8,

wherein the deformation transducer (60) includes a strain gauge (61) internally affixed within the CPR manikin (30) electromechanically respond to the oscillating deformation of the CPR manikin (30);

wherein the strain gauge (61) is configured to modulate the clean simulated thoracic impedance signal into a modulated simulated thoracic impedance signal as a function of the oscillating deformation of the CPR manikin (30); and

wherein the deformation transducer (60) further includes a signal conditioner (61) configured to condition the modulated simulated thoracic impedance signal into the corrupted simulated thoracic impedance signal.

14. The cardiopulmonary resuscitation simulation system of claim 8,

wherein the deformation transducer (60) includes a strain gauge (61) internally affixed within the CPR manikin (30) electromechanically respond to the oscillating deformation of the CPR manikin (30);

wherein the strain gauge (61) is configured to modulate a reference deformation signal into a modulated deformation signal as a function of the oscillating deformation of the CPR manikin (30); and

wherein the deformation transducer (60) further includes a signal combiner (63) configured to combine the clean simulated thoracic impedance signal and the modulated deformation signal into the corrupted simulated thoracic impedance signal.

15. A cardiopulmonary resuscitation simulation method, comprising:

electromechanically responding, by a transducive signal modulator (40) internally affixed with a CPR manikin (30), an oscillating compression depth of the CPR manikin (30) during the simulated application of the cardiopulmonary resuscitation to the CPR manikin (30),

deriving, by the transducive signal modulator (40), a corrupted simulated electrocardiogram signal from a signal modulation of the clean simulated electrocardiogram signal electromechanically responsive to the oscillating compression depth of the CPR manikin (30);

electromechanically responding, by the transducive signal modulator (40), an oscillating deformation of the CPR manikin (30) during the simulated application of the cardiopulmonary resuscitation to the CPR manikin (30); and

deriving, by the transducive signal modulator (40), a corrupted simulated thoracic impedance signal from a signal modulation of the clean simulated thoracic impedance signal electromechanically responsive to the oscillating deformation of the CPR manikin (30).

FIG. 1A
(PRIOR ART)

FIG. 1B
(PRIOR ART)

31

30

ECG
11

IMP
12

TRANSDUCIVE
SIGNAL MODULATOR
40

ECG
41

IMP
42

## FIG. 2A

41a

42a

## FIG. 2B

FIG. 3A

FIG. 3B

50a

ECG
11  →  DEPTH
SENSOR
51a  →  ECG
41a

FIG. 4A

50b

ECG
11  →  DEPTH
SENSOR
51a  →  ECG
41b  →  SIGNAL
CONDITIONER
52  →  ECG
41c

FIG. 4B

50c

ECG
11  →

DEPTH
SENSOR
51b  →  TRK
54  →  SIGNAL
COMBINER
53  →  ECG
41d

FIG. 4C

FIG. 5A

FIG. 5B

60a

IMP
12

STRAIN
GAUGE
61a

IMP
42a

## FIG. 6A

60b

IMP
12

STRAIN
GAUGE
61b

IMP
42b

SIGNAL
CONDITIONER
62

IMP
42c

## FIG. 6B

60c

IMP
12

SIGNAL
COMBINER
63

IMP
42d

REF
64a

STRAIN
GAUGE
61a

MOD
64b

## FIG. 6C

FIG. 7A

FIG. 7B

FIG. 7C

Europäisches
Patentamt
European
Patent Office
Office européen
des brevets

**EUROPEAN SEARCH REPORT**

Application Number

EP 24 21 6742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/255537 A1 (TO LOK YIU [US] ET AL) 17 August 2023 (2023-08-17) | 1,2,5-9, 12-15 | INV. G09B23/28 |
| A | * paragraphs [0003] - [0006], [0029], [0032], [0035] - [0041], [0049], [0052], [0056]; figure 2A * | 3,4,10, 11 | |
| A | US 9 633 577 B2 (ZOLL MEDICAL CORP [US]) 25 April 2017 (2017-04-25) * claim 1; figure 1 * | 1-15 | |

TECHNICAL FIELDS
SEARCHED        (IPC)

G09B

The present search report has been drawn up for all claims

| Place of search | Date of completion of the search | Examiner |
|---|---|---|
| Munich | 13 March 2025 | Beaucé, Gaëtan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                      

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 6742

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2025

| Patent document cited in search report | | Publication date | Patent family member(s) | | Publication date |
|---|---|---|---|---|---|
| US 2023255537 | A1 | 17-08-2023 | CN | 117441216 A | 23-01-2024 |
| | | | EP | 4178443 A1 | 17-05-2023 |
| | | | JP | 2023533546 A | 03-08-2023 |
| | | | US | 2023255537 A1 | 17-08-2023 |
| | | | WO | 2022008301 A1 | 13-01-2022 |
| US 9633577 | B2 | 25-04-2017 | NONE | | |

EPO FORM P0459

For more details about this annex : see Official Journal of the European Patent Office, No. 12/82